# EUROPEAN PATENT SPECIFICATION

(11) **EP 1 624 517 B1**
(45) Date of publication and mention of the grant of the patent: **29.04.2009**
(21) Application number: 05105979.8
(22) Date of filing: 30.06.2005
(51) Int. Cl.: H01M 8/04, F15B 13/00

(54) **Channel-incorporating pedestal and method for producing the same**
Block mit Fluidkanälen und Methode zu dessen Herstellung
Bloc avec conduits pour fluide et sa méthode de fabrication

(30) Priority: 21.07.2004 JP 2004212904
(43) Date of publication of application: 08.02.2006
(73) Proprietor: MITSUBISHI HEAVY INDUSTRIES, LTD., Tokyo 108-8215 (JP)
(72) Inventor: Hidaka, Haretaro, Mihara-shi Hiroshima (JP); Tsukamoto, Michio, Mihara-shi Hiroshima (JP)
(74) Representative: Jorio, Paolo

(56) References cited:
- US-A- 4 110 140
- US-A- 5 558 955
- US-A1- 2002 108 740
- PATENT ABSTRACTS OF JAPAN vol. 2003, no. 02, 5 February 2003 (2003-02-05) -& JP 2002 305010 A (MITSUBISHI HEAVY IND LTD), 18 October 2002 (2002-10-18)

## Description

### Technical Field

This invention relates to a channel-incorporating pedestal, and a method for producing it.

### Background Art

A channel-incorporating pedestal is applied, for example, to various systems in various industrial fields, such as a stationary fuel cell power generation system for domestic use or a movable fuel cell power generation system for installation in a vehicle, and fluid control systems, e.g., air brake systems for trains. That is, the channel-incorporating pedestal is configured such that various instruments, such as components and devices constituting these systems, are mounted on the surface of the pedestal, built-in channels (grooves) are provided in place of complicated piping connecting these instruments (the built-in channels function as the piping), and further electrical wiring is also incorporated. The channel-incorporating pedestal, so configured, is put to practical uses as compact integrated units, such as stationary units including domestic fuel cell power generation units, and moving units including vehicle-installed fuel cell power generation units.

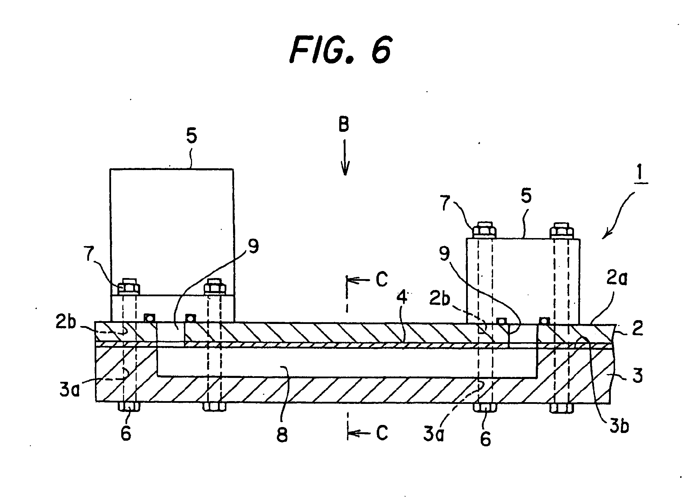

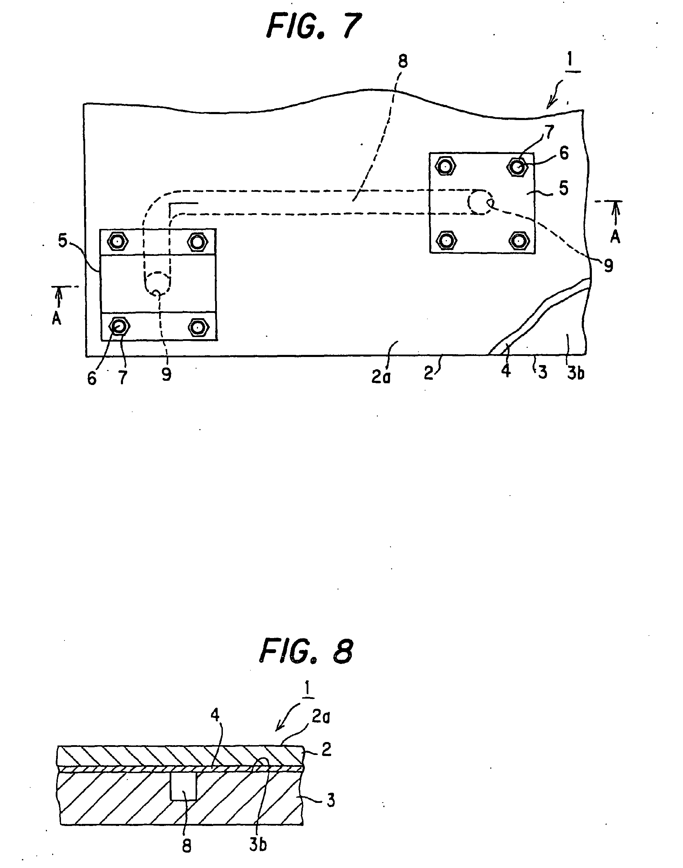

Various proposals have been made for concrete configurational examples of the channel-incorporating pedestal. For example, those disclosed in Japanese Patent Application Laid-Open No. 2002-305010 or US 2002/108740 A1 can be named. A configurational example of a conventional channel-incorporating pedestal will be described hereinbelow with reference to FIGS. 6 to 8. FIG. 6 is a sectional view showing the configuration of the conventional channel-incorporating pedestal (a sectional view taken on line A-A of FIG. 7), FIG. 7 is a plan view taken in the direction of B in FIG. 6, and FIG. 8 is a sectional view taken on line C-C of FIG. 6.

As shown in FIGS. 6, 7 and 8, a channel-incorporating pedestal 1 comprises an upper plate 2 and a lower plate 3 joined together by publicly known friction stir welding or a suitable binder 4. Various instruments 5, such as components and devices constituting, for example, a fuel cell power generation system or a fluid control system, which are suitably placed on the surface 2a of the upper plate 2, are fixed by clamping, integrally with the upper and lower plates 2 and 3, by bolts 6 inserted through bolt holes 2b and 3a formed in the upper and lower plates 2 and 3, and nuts 7 screwed to the bolts 6. That is, the channel-incorporating pedestal 1 functions as a pedestal for mounting the instruments 5.

A groove 8 is formed in a joining surface 3b of the lower plate 3. Generally, a plurality of the grooves 8 are formed, have predetermined sectional areas, and are formed with suitable lengths in suitable directions. The upper plate 2 is joined to the lower plate 3 in such a manner as to cover the groove 8 (put a lid on the groove 8) formed in the lower plate 3. As a result, a channel for a fluid, which consists of the groove 8, is formed within the channel-incorporating pedestal 1.

Communication holes 9 are formed in the upper plate 2, and the groove 8 are brought into communication with the instruments 5 via these communication holes 9. That is, the groove 8 is incorporated, as the channel for a fluid, in the channel-incorporating pedestal 1. These built-in channels (grooves 8) have the function of piping connecting the instruments 5 together. In other words, the channel-incorporating pedestal 1 also functions as integrated piping. The sectional area of each groove 8 (built-in channel) is determined by the properties, flow velocity and pressure loss of a fluid flowing in each groove 8, and the length and direction of each groove 8 (built-in channel) are determined, for example, by the arrangement of the instruments 5.

As the material for the upper and lower plates 2 and 3, an aluminumplate is usedmost frequently because of its light weight, strength, and ease of processing. Other materials in frequent use are a metallic material such as a steel plate, and a metallic material such as a casting product.

There may be a case where the fluid flowing through the groove 8 and the communication hole 9 is a corrosive fluid for the metallic material constituting the upper and lower plates 2 and 3, or has a possibility for corroding the metallic material, for example, by a local cell action. In this case, the surfaces of the groove 8 and the communication hole 9, which are in contact with the fluid, are coated with an aluminum oxide film (alumite), or are subjected to corrosion protection by polytetrafluoroethylene (PTFE: Teflon (registered trademark)) coating. Alternatively, the upper plate 2 and the lower plate 3, as a whole, are produced, for example, from corrosion-free synthetic resin (see, e.g. US-A-4 110 140). Such measures have so far dealt with possible corrosion.

However, the measures for corrosion protection involve a complicated manufacturing process, require a long time for completion, and need a great investment in production facilities, thus entailing high costs. Moreover, the production of the upper and lower plates 2 and 3, as a whole, from corrosion-free synthetic resin poses problems, such that some reinforcement is required, and the use of the synthetic resin is feasible only when the pressure of the fluid flowing through the groove 8 is low, because the upper and lower plates 2 and 3 generally undergo marked deformation, and their mechanical strength is low.

The present invention has been accomplished in light of the above-described circumstances. It is an object of the present invention to provide a channel-incorporating pedestal having corrosion resistance, which can be produced at a low cost, and which can ensure mechanical strength, and a method for producing the channel-incorporating pedestal.

### Summary of the Invention

This object is attained by a channel-incorporating pedestal as claimed in claim 1, and by a method for producing the same as claimed in claim 3.

### Brief Description of the Drawings

The present invention will become more fully understood from the detailed description given hereinbelow and the accompanying drawings which are given by way of illustration only, and thus are not limitative of the present invention, and wherein:

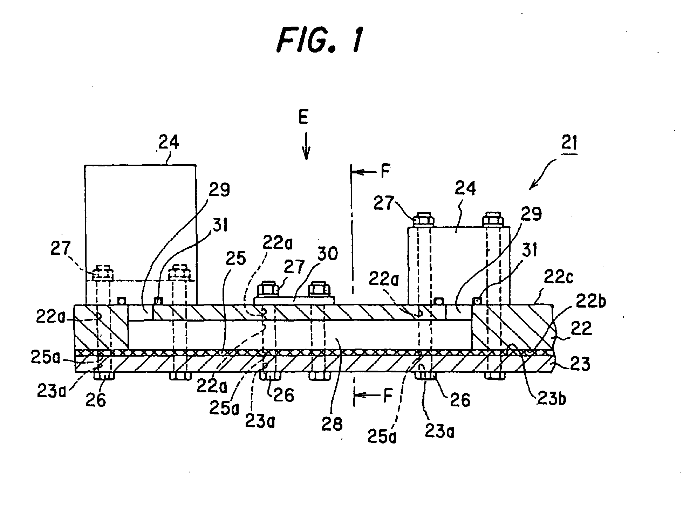

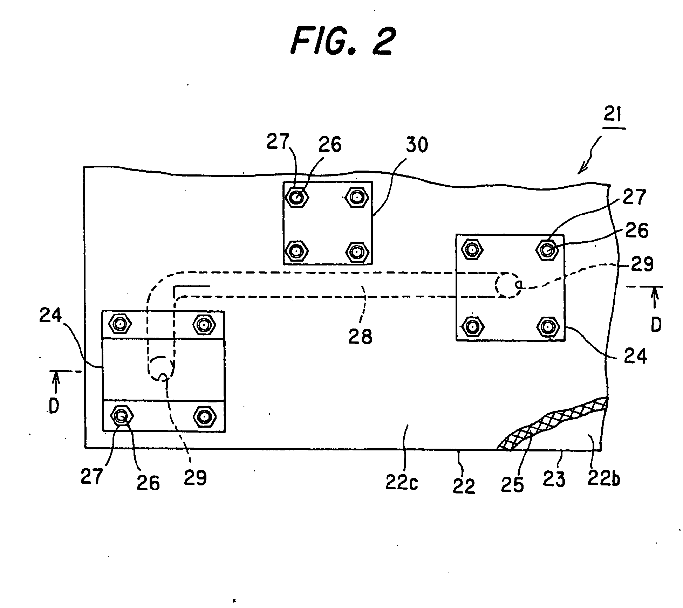

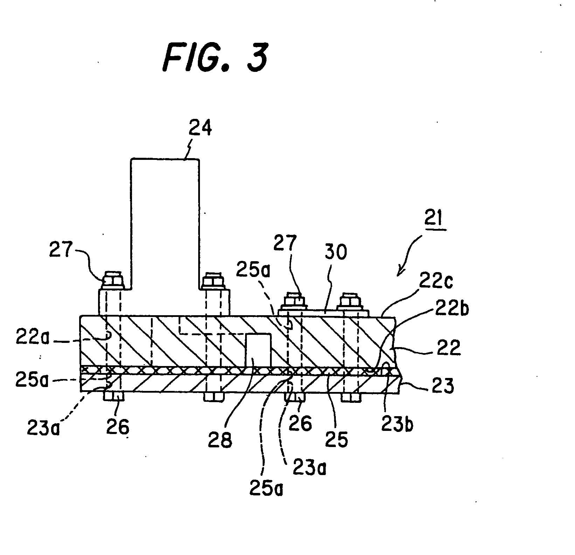

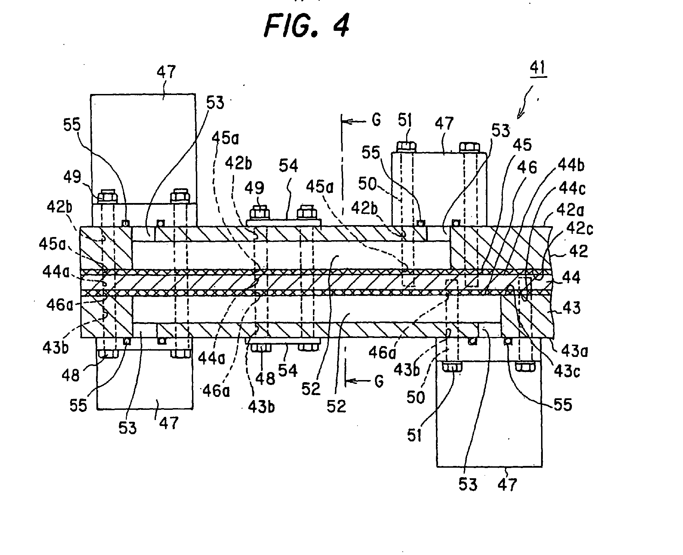

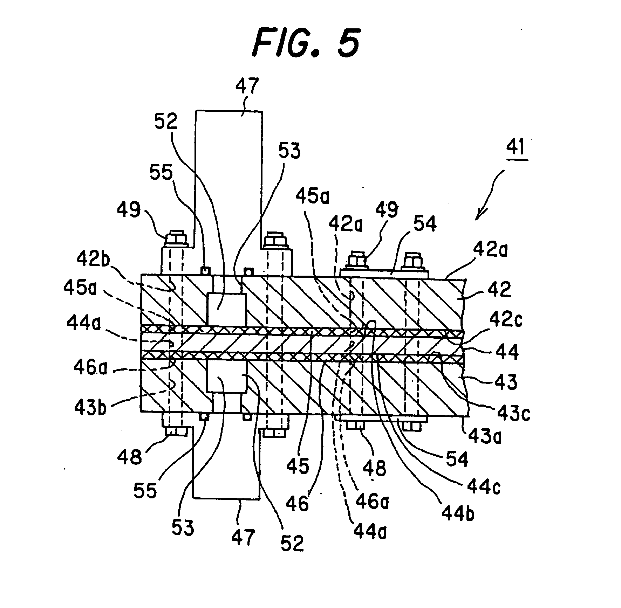

FIG. 1 is a sectional view showing the configuration of a channel-incorporating pedestal according to Embodiment 1 of the present invention (a sectional view taken on line D-D of FIG. 2); FIG. 2 is a plan view taken in the direction of E in FIG. 1; FIG. 3 is a sectional view taken on line F-F of FIG. 1; FIG. 4 is a sectional view showing the configuration of a channel-incorporating pedestal according to Embodiment 2 of the present invention; FIG. 5 is a sectional view taken on line G-G of FIG. 4; FIG. 6 is a sectional view showing the configuration of a conventional channel-incorporating pedestal (a sectional view taken on line A-A of FIG. 7); FIG. 7 is a plan view taken in the direction of B in FIG. 6; and FIG. 8 is a sectional view taken on line C-C of FIG. 6.

### Detailed Description

Embodiments of the present invention will now be described in detail with reference to the accompanying drawings.

### Embodiment 1

FIG. 1 is a sectional view showing the configuration of a channel-incorporating pedestal according to Embodiment 1 of the present invention (a sectional view taken on line D-D of FIG. 2), FIG. 2 is a plan view taken in the direction of E in FIG. 1, and FIG. 3 is a sectional view taken on line F-F of FIG. 1.

As shown in FIGS. 1, 2 and 3, a channel-incorporating pedestal 21 comprises an upper plate 22, as a first plate, and a lower plate 23, as a second plate, joined together. An adhesive protective sheet 25 is interposed between the upper plate 22 and the lower plate 23. Various instruments 24, such as components and devices constituting, for example, a fuel cell power generation system or a fluid control system, are placed on the surface 22c of the upper plate 22. These instruments 24 are fixed by clamping, integrally with the upper and lower plates 22 and 23, by bolts 26 inserted through bolt holes 22a, 23a and 25a formed in the upper and lower plates 22 and 23 and the adhesive protective sheet 25, and nuts 27 screwed to the bolts 26. That is, the channel-incorporating pedestal 21 functions as a pedestal for mounting the instruments 24.

A groove 28 is formed in a joining surface 22b of the upper plate 22 by suitable means such as machining, injection molding, or die casting. Generally, a plurality of the grooves 28 are formed, have predetermined sectional areas (widths and depths), and are formed with suitable lengths in suitable directions. The lower plate 23 is joined to the upper plate 22 via the adhesive protective sheet 25 in such a manner as to cover the groove 28 formed in the upper plate 22. As a result, a channel for a fluid, which consists of the groove 28, is formed within the channel-incorporating pedestal 21.

Communication holes 29 are formed in the upper plate 22, directly below the instruments 24 disposed on the upper plate 22, by suitable means such as machining, injection molding, or die casting. The groove 28 is brought into communication with the instruments 24 via these communication holes 29. That is, the groove 28 is incorporated, as the channel for a fluid, in the channel-incorporating pedestal 21. These built-in channels (grooves 28) have the function of piping connecting the instruments 24 together. Thus, the channel-incorporating pedestal 21 also functions as integrated piping. The sectional area of each groove 28 (built-in channel) is determined by the properties, flow velocity and pressure loss of the fluid flowing in each groove 28, and the length and direction of each groove 28 (built-in channel) are determined, for example, by the arrangement of the instruments 24. A clearance between the communication hole 29 and the instrument 24 is sealed with an O ring 31.

The upper plate 22 comprises a nonmetallic material having corrosion resistance, and the lower plate 23 comprises a metallic material. Examples of the corrosion-resistant material are corrosion-free synthetic resins, such as fluoroplastic plates, for example, polytetrafluoroethylene (PTFE: Teflon). As examples of the metallic material, an aluminum plate and a steel plate can be named. The thickness of the lower plate 23 is a suitable thickness for required mechanical strength.

The adhesive protective sheet 25 is a thermoplasticandcorrosion-resistantone. A publicly known, commercially available product can be used as the adhesive protective sheet 25. To be selected as the adhesive protective sheet 25 is a sheet-shaped product which is based on the same material as that of the upper plate 22, which has a suitable thickness, and which comprises, for example, a thermoplastic synthetic resin well compatible with and highly adhesive to a joining surface 23b of the lower plate 23. Furthermore, the adhesive protective sheet 25 has to have a lower melting point than those of the upper plate 22 and the lower plate 23. For example, if the material for the lower plate 23 is aluminum, and the material for the upper plate 22 is PTFE, then a material having a lower melting point than the melting point of PTFE (327°C) needs to be selected for the adhesive protective sheet 25.

A method for producing the channel-incorporating pedestal 21 will be described. First, the adhesive protective sheet 25 is sandwiched (interposed) between the upper plate 22 and the lower plate 23 throughout the surfaces of the upper and lower plates 22 and 23. Then, in this state, a suitable pressurizing means (pressing means) is applied to the upper and lower plates 22 and 23, such that the upper and lower plates 22 and 23 are clamped by a clamping device (not shown), or a heavy object is placed on the upper and lower plates 22 and 23. By this measure, the adhesive protective sheet 25, together with the upper and lower plates 22 and 23, is pressurized (given pressure) under a suitable pressurizing force. Moreover, the adhesive protective sheet 25, together with the upper and lower plates 22 and 23, is heated by a heating means, such as a baking furnace (heating furnace), to a suitable temperature at which the adhesive protective sheet 25 is melted and adhered. The pressurizing force and the heating temperature differ according to the type of the adhesive protective sheet 25. For example, the heating temperature is usually several hundred degrees centigrade.

As a result, the upper plate 22 and the lower plate 23 are bonded together by the adhesive protective sheet 25.

Concretely, at the portion of joining between the upper and lower plates 22 and 23, namely, at a portion where the adhesive protective sheet 25 contacts the joining surface 22b of the upper plate 22 and the joining surface 23b of the lower plate 23 (i.e., the portion other than the portion corresponding to the groove 28 formed in the upper plate 22), the upper and lower plates 22 and 23 are bonded by the adhesive protective sheet 25. In the non-joining portion of the upper and lower plates 22 and 23, namely, the portion corresponding to the groove 28 formed in the upper plate 22, the adhesive protective sheet 25 is fusion bonded to the joining surface 23b of the lower plate 23, coating or lining the joining surface 23b. Thus, the adhesive protective sheet 25 protects the relevant portion of the lower plate 23 from a corrosive fluid flowing in the groove 28.

Then, the instruments 24 are placed on the upper plate 22, and they are clamped by the bolts 26 and the nuts 27 for fixing, whereby sufficient strength of the bonding surfaces can be ensured. Furthermore, if it is necessary to enhance the bond strength between the upper and lower plates 22 and 23 because the fluid flowing through the groove 28 is at a high pressure, the upper and lower plates 22 and 23 and the adhesive protective sheet 25 may be clamped together by the bolts 26 and the nuts 27 via a suitable metal plate 30 disposed on the upper plate 22 for the purpose of reinforcement. In this case, it is vital that the bolt holes 22a, 23a and 25a evade the groove 28.

The adhesive protective sheet 25 on the market will be illustrated. If, for example, the upper plate 22 is formed from PTFE, "RAP" (commercial name) of DAIKIN INDUSTRIES, which is an adhesive protective sheet comprising the same series of material as PTFE, was used, and bonded under pressure at a heating temperature of about 300°C. Satisfactory bond strength and anti-corrosion effect were obtained.

As described above, the channel-incorporating pedestal 21 of the present Embodiment 1 comprises the upper plate 22 and the lower plate 23 joined together, incorporates the groove 28, which is formed on the joining surface 22b of the upper plate 22, as the channel for the fluid, and brings the groove 28 into communication with the instruments 24, which are placed on the surface 22c of the upper plate 22, via the communication holes 29 formed in the upper plate 22. This channel-incorporating pedestal is characterized in that the upper plate 22 comprises the anticorrosive material, the lower plate 23 comprises the metallic material, and the upper plate 22 and the lower plate 23 are bonded together by the adhesive protective sheet 25 interposed between the upper plate 22 and the lower plate 23, the adhesive protective sheet 25 having a lower melting point than the melting points of the upper plate 22 and the lower plate 23, and being thermoplastic and anticorrosive.

The method for producing the channel-incorporating pedestal 21 of the present Embodiment 1 is a method for producing a channel-incorporating pedestal, which comprises the upper plate 22 and the lower plate 23 joined together, incorporates the groove 28, formed on the joining surface 22b of the upper plate 22, as the channel for the fluid, and brings the groove 28 into communication with the instruments 24, placed on the surface 22c of the upper plate 22, via the communication holes 29 formed in the upper plate 22. This method is characterized by using the anticorrosive material as the upper plate 22, using the metallic material as the lower plate 23, and pressurizing and heating the upper plate 22 and the lower plate 23, with the adhesive protective sheet 25 being interposed between the upper plate 22 and the lower plate 23, the adhesive protective sheet 25 having a lower melting point than the melting points of the upper plate 22 and the lower plate 23, and being thermoplastic and anticorrosive, to melt the adhesive protective sheet 25, thereby bonding the upper plate 22 and the lower plate 23 together by the adhesive protective sheet 25.

According to the present Embodiment 1, as described above, the upper plate 22 having the groove 28 and the communication holes 29 formed therein comprises the anticorrosive material, and the lower plate 23 comprising the metallic material is protected by the anticorrosive adhesive protective sheet 25. Thus, the upper plate 22 and the lower plate 23 have corrosion resistance, for example, to the corrosive fluid flowing in the groove 28. Furthermore, the lower plate 23 comprises the metallic material, so that the lower plate 23 can ensure the mechanical strength of the channel-incorporating pedestal 21. If further strength is needed, the further strength can be easily obtained simply by increasing the wall thickness of the lower plate 23. Moreover, the strength can be easily enhanced by clamping the upper plate 22 and the lower plate 23 by the bolt 26 and the nut 27 via the metal plate 30.

Besides, corrosion prevention can be easily performed simply by bonding the upper and lower plates 22 and 23 together by the adhesive protective sheet 25. For example, the lower plate 23 has the simplest flat surface. Thus, merely by applying a suitable pressurizing force and a suitable heating temperature to the adhesive protective sheet 25, satisfactory bonding force and anticorrosive performance can be ensured easily. Consequently, as compared with a conventional corrosion prevention measure such as aluminum oxide film coating, the channel-incorporating pedestal 21 with anticorrosive properties can be produced easily, and cost reduction can be achieved. If a synthetic resin such as PTFE is used as the material for the upper plate 22, the groove 28 and the communication holes 29 can be formed easily by a method such as machining, injection molding, or die casting. Thus, further cost reduction can be achieved.

### Embodiment 2

FIG. 4 is a sectional view showing the configuration of a channel-incorporating pedestal according to Embodiment 2 of the present invention. FIG. 5 is a sectional view taken on line G-G of FIG. 4.

As shown in FIGS. 4 and 5, a channel-incorpora ting pedestal 41 comprises an upper plate 42 as a first plate, an upper plate 43 as a third plate, and a lower plate 44 as a second plate joined together, with the lower plate 44 being interposed between the upper plate 42 and the upper plate 43. That is, the two upper plates 42 and 43 are stacked in opposed relation, with the lower plate 44 being interposed therebetween, to make up a multistage configuration. An adhesive protective sheet 45 is interposed between the upper plate 42 and the lower plate 44, and an adhesive protective sheet 46 is interposed between the upper plate 43 and the lower plate 44.

Various instruments 47, such as components and devices constituting, for example, a fuel cell power generation system or a fluid control system, are placed on the surface 42a of the upper plate 42 and the surface 43a of the upper plate 43. The instruments 47, which are placed in vertical alignment, are fixed by clamping, integrally with the upper and lower plates 42, 43 and 44, by bolts 48 inserted through bolt holes 42b, 43b, 44a, 45a, 46a formed in the upper and lower plates 42, 43 and 44 and the adhesive protective sheets 45 and 46, and nuts 49 screwed to the bolts 48. The instruments 47, which are placed out of vertical alignment, are fixed by clamping, integrally with the upper and lower plates 42, 44 or the upper and lower plates 43, 44, by stud bolts 50 driven into the lower plate 44 and inserted through the bolt holes 45a, 42b or the bolt holes 46a, 43b, and nuts 51 screwed to the stud bolts 50. That is, the channel-incorporating pedestal 41 functions as a pedestal for mounting the instruments 47.

Grooves 52 are formed in a joining surface 42c of the upper plate 42 and a joining surface 43c of the upper plate 43 by suitable means such as machining, injection molding, or die casting. Generally, a plurality of the grooves 52 are formed, have predetermined sectional areas (widths and depths), and are formed with suitable lengths in suitable directions. The lower plate 44 is joined to the upper plate 42 and the upper plate 43 via the adhesive protective sheets 45, 46 in such a manner as to cover the groove 52, as a first groove, formed in the upper plate 42, and the groove 52, as a second groove, formed in the upper plate 43. As a result, channels for fluids, which consist of the grooves 52, are formed within the channel-incorporating pedestal 41.

Communication holes 53 are formed in the upper plates 42, 43, directly below the instruments 47 disposed on the upper plates 42, 43, by suitable means such as machining, injection molding, or die casting. The groove 52 of the upper plate 42 is brought into communication with the instruments 47 on the upper plate 42 via the communication holes 53 of the upper plate 42. The groove 52 of the upper plate 43 is brought into communication with the instruments 47 on the upper plate 43 via the communication holes 53 of the upper plate 43. That is, the grooves 52 are incorporated, as the channels for fluids, in the channel-incorporating pedestal 41. These built-in channels (grooves 52) have the function of piping connecting the instruments 47 together. Thus, the channel-incorporating pedestal 41 also functions as integrated piping. The sectional area of each groove 52 (built-in channel) is determined by the properties, flow velocity and pressure loss of the fluid flowing in each groove 52, and the length and direction of each groove 52 (built-in channel) are determined, for example, by the arrangement of the instruments 47. A clearance between the communication hole 53 and the instrument 47 is sealed with an O ring 55.

The upper plates 42, 43 each comprise a nonmetallic material having corrosion resistance, and the lower plate 44 comprises a metallic material. Examples of the corrosion-resistant material are corrosion-free synthetic resins, such as fluoroplastic plates, for example, polytetrafluoroethylene (PTFE: Teflon). As examples of the metallic material, an aluminum plate and a steel plate can be named. The thickness of the lower plate 44 is a suitable thickness for required mechanical strength.

The adhesive protective sheets 45, 46 are thermoplastic and corrosion-resistant ones. A publicly known, commercially available product can be used as the adhesive protective sheets 45, 46. To be selected as the adhesive protective sheets 45, 46 is a sheet-shaped product which is based on the same material as that of the upper plates 42, 43, which has a suitable thickness, and which comprises, for example, a thermoplastic synthetic resin well compatible with and highly adhesive to the joining surfaces 44b, 44c of the lower plate 44. Furthermore, the adhesive protective sheets 45, 46 have to have a lower melting point than those of the upper plates 42, 43 and the lower plate 44. For example, if the material for the lower plate 44 is aluminum, and the material for the upper plates 42, 43 is PTFE, then a material having a lower melting point than the melting point of PTFE (327°C) needs to be selected for the adhesive protective sheets 45, 46.

A method for producing the channel-incorporating pedestal 41 will be described. First, the adhesive protective sheet 45 is sandwiched (interposed) between the upper plate 42 and the lower plate 44 throughout the surfaces of the upper and lower plates 42 and 44. Also, the adhesive protective sheet 46 is sandwiched (interposed) between the upper plate 43 and the lower plate 44 throughout the surfaces of the upper and lower plates 43 and 44. Then, in this state, a suitable pressurizing means (pressing means) is applied to the upper and lower plates 42, 43, 44, such that the upper and lower plates 42, 43, 44 are clamped by a clamping device (not shown), or a heavy object is placed on the upper and lower plates 42, 43, 44. By this measure, the adhesive protective sheets 45, 46, together with the upper and lower plates 42, 43, 44, are pressurized (given pressure) under a suitable pressurizing force. Moreover, the adhesive protective sheets 45, 46, together with the upper and lower plates 42, 43, 44, are heated by a heating means, such as a baking furnace (heating furnace), to a suitable temperature at which the adhesive protective sheets 45, 46 are melted and adhered. The pressurizing force and the heating temperature differ according to the type of the adhesive protective sheets 45, 46. For example, the heating temperature is usually several hundred degrees centigrade.

As a result, the upper plate 42 and the lower plate 44 are bonded together by the adhesive protective sheet 45, and the upper plate 43 and the lower plate 44 are bonded together by the adhesive protective sheet 46.

Concretely, at the portion of joining between the upper and lower plates 42 and 44, namely, at a portion where the adhesive protective sheet 45 contacts the joining surface 42c of the upper plate 42 and the joining surface 44b of the lower plate 44 (i.e., the portion other than the portion corresponding to the groove 52 formed in the upper plate 42), the upper and lower plates 42 and 44 are bonded by the adhesive protective sheet 45. In the non-joining portion of the upper and lower plates 42 and 44, namely, the portion corresponding to the groove 52 formed in the upper plate 42, the adhesive protective sheet 45 is fusion bonded to the joining surface 44b of the lower plate 44, coating or lining the joining surface 44b. Thus, the adhesive protective sheet 45 protects the relevant portion of the lower plate 44 from a corrosive fluid flowing in the groove 52.

Similarly, at the portion of joining between the upper and lower plates 43 and 44, namely, at a portion where the adhesive protective sheet 46 contacts the joining surface 43c of the upper plate 43 and the joining surface 44c of the lower plate 44 (i.e., the portion other than the portion corresponding to the groove 52 formed in the upper plate 43), the upper and lower plates 43 and 44 are bonded by the adhesive protective sheet 46. In the non-joining portion of the upper and lower plates 43 and 44, namely, the portion corresponding to the groove 52 formed in the upper plate 43, the adhesive protective sheet 46 is fusion bonded to the joining surface 44c of the lower plate 44, coating or lining the joining surface 44c. Thus, the adhesive protective sheet 46 protects the relevant portion of the lower plate 44 from a corrosive fluid flowing in the groove 52.

Then, the instruments 47 are placed on the upper plates 42, 43, and they are clamped by the bolts 48, 50 and the nuts 49, 51 for fixing, whereby sufficient strength of the bonding surfaces can be ensured. Furthermore, if it is necessary to enhance the bond strength between the upper plates 42, 43 and the lower plate 44 because the fluids flowing in the grooves 52 are set at a high pressure, the upper and lower plates 42, 43, 44 and the adhesive protective sheets 45, 46 may be clamped together by the bolts 48 and the nuts 49 via suitable metal plates 54 disposed on the upper plates 42, 43 for the purpose of reinforcement. In this case, it is vital that the bolt holes 42b, 43b, 45a, 46a evade the grooves 52.

As described above, the channel-incorporating pedestal 41 of the present Embodiment 2 comprises the upper and lower plates 42, 43 and 44 joined together, with the lower plate 44 being interposed between the upper plates 42 and 43, incorporates the grooves 52, which are formed on the joining surfaces 42c, 43c of the upper plates 42, 43, as the channels for fluids, brings the groove 52 of the upper plate 42 into communication with the instruments 47, which are placed on the surface 42a of the upper plate 42, via the communication holes 53 formed in the upper plate 42, and brings the groove 52 of the upper plate 43 into communication with the instruments 47, which are placed on the surface 43a of the upper plate 43, via the communication holes 53 formed in the upper plate 43. This channel-incorporating pedestal is characterized in that the upper plates 42, 43 comprise the anticorrosive material, the lower plate 44 comprises the metallic material, the upper plate 42 and the lower plate 44 are bonded together by the adhesive protective sheet 45 interposed between the upper and lower plates 42 and 44, the adhesive protective sheet 45 having a lower melting point than the melting points of the upper and lower plates 42, 43, 44, and being thermoplastic and anticorrosive, and the upper plate 43 and the lower plate 44 are bonded together by the adhesive protective sheet 46 interposed between the upper and lower plates 43 and 44, the adhesive protective sheet 46 having a lower melting point than the melting points of the upper and lower plates 42, 43, 44, and being thermoplastic and anticorrosive.

The method for producing the channel-incorporating pedestal 41 of the present Embodiment 2 is a method for producing a channel-incorporating pedestal, which comprises the upper and lower plates 42, 43, 44 joined together, with the lower plate 44 being interposed between the upper plates 42 and 43, incorporates the grooves 52, formed on the joining surfaces 42c, 43c of the upper plates 42, 43, as the channels for fluids, brings the groove 52 into communication with the instruments 47, placed on the surface 42a of the upper plate 42, via the communication holes 53 formed in the upper plate 42, and brings the groove 52 into communication with the instruments 47, placed on the surface 43a of the upper plate 43, via the communication holes 53 formed in the upper plate 43. This method is characterized by using the anticorrosive material as the upper plates 42, 43, using the metallic material as the lower plate 44, and pressurizing and heating the upper and lower plates 42, 43, 44, with the adhesive protective sheet 45 being interposed between the upper plate 42 and the lower plate 44, the adhesive protective sheet 45 having a lower melting point than the melting points of the upper and lower plates 42, 43, 44, and being thermoplastic and anticorrosive, and with the adhesive protective sheet 46 being interposed between the upper plate 43 and the lower plate 44, the adhesive protective sheet 46 having a lower melting point than the melting points of the upper and lower plates 42, 43, 44, and being thermoplastic and anticorrosive, to melt the adhesive protective sheets 45, 46, thereby bonding the upper plate 42 and the lower plate 44 together by the adhesive protective sheet 45, and bonding the upper plate 43 and the lower plate 44 together by the adhesive protective sheet 46.

According to the present Embodiment 2 , the upper plates 42, 43 having the grooves 52 and the communication holes 53 formed therein comprise the anticorrosive material, and the lower plate 44 comprising the metallic material is protected by the anticorrosive adhesive protective sheets 45, 46. Thus, the upper and lower plates 42, 43, 44 have corrosion resistance, for example, to the corrosive fluid flowing in the grooves 52. Furthermore, the lower plate 44 comprises the metallic material, so that the lower plate 44 can ensure the mechanical strength of the channel-incorporating pedestal 41. If further strength is needed, the further strength can be easily obtained simply by increasing the wall thickness of the lower plate 44. Moreover, the strength can be easily enhanced by clamping the upper and lower plates 42, 43, 44 by the bolts 48 and the nuts 49 via the metal plate 54.

Besides, corrosion prevention can be easily performed simply by bonding the upper and lower plates 42, 43 and 44 together by the adhesive protective sheets 45, 46. For example, the lower plate 44 has the simplest flat surface. Thus, merely by applying a suitable pressurizing force and a suitable heating temperature to the adhesive protective sheets 45, 46, satisfactory bonding force and anticorrosive performance can be ensured easily. Consequently, as compared with a conventional corrosion prevention measure such as aluminum oxide film coating, the channel-incorporating pedestal 41 with anticorrosive properties can be produced easily, and cost reduction can be achieved. If a synthetic resin such as PTFE is used as the material for the upper plate 42, the groove 52 and the communication holes 53 can be easily formed by a method such as machining, injection molding, or die casting. Thus, further cost reduction can be achieved. Furthermore, a multistage channel-incorporating pedestal, which is compact and lightweight, can be produced.

As described above, the present invention relates to a channel-incorporating pedestal, which is useful when applied in preventing the occurrence of cracks in weld lines surrounding the groove and the corrosion of the weld lines to maintain the sealing function of the weld lines.

The invention thus described, it will be obvious that the same may be varied in many ways within the scope of the following claims.

## Claims

1. A channel-incorporating pedestal (21) comprising a first plate (22) and a second plate (23) joined together,
incorporating a groove (28), which is formed on a joining surface (22b) of said first plate (22), as a channel for a fluid, and
bringing said groove (28) into communication with an instrument (24), which is placed on a surface (22c) of said first plate (22), via a communication hole (29) formed in said first plate (22),
said first plate (22) comprising an anticorrosive material, **characterized in that**
said second plate (23) comprises a metallic material, and
said first plate (22) and said second plate (23) are bonded together by an adhesive protective sheet (25) interposed between said first plate (22) and said second plate (23) throughout the surfaces of these plates (22,23), said adhesive protective sheet (25) having a lower melting point than melting points of said first plate (22) and said second plate (23), and being thermoplastic and anticorrosive.

2. A channel-incorporating pedestal (41) as claimed in claim 1,
comprising a third plate (43) joined together with said first plate (42) and second plate (44), with said second plate (44) being interposed between said first plate (42) and said third plate (43),
incorporating a second groove (52), which is formed on a joining surface (43c) of said third plate (43), as a channel for a fluid, and
bringing said second groove (52) into communication with an instrument (47), which is placed on a surface (43a) of said third plate (43), via a second communicationhole (53) formed in said third plate (43),
said third plate (43) comprising an anticorrosive material,
said third plate (43) and said second plate (44) being bonded together by a second adhesive protective sheet (46) interposed between said third plate (43) and said second plate (44) throughout the surfaces of these plates (43,44), said second adhesive protective sheet (46) having a lower melting point than melting points of said first plate (42), said second plate (44), and said third plate (43), and being thermoplastic and anticorrosive.

3. A method for producing a channel-incorporating pedestal (21),
said channel-incorporating pedestal (21)
comprising a first plate (22) and a second plate (23) joined together,
incorporating a groove (28), which is formed on a joining surface (22b) of said first plate (22), as a channel for a fluid, and
bringing said groove (28) into communication with an instrument (24), which is placed on a surface (22c) of said first plate (22), via a communication hole (29) formed in said first plate (22),
said method including the steps of:
using a plate comprising an anticorrosive material as said first plate (22),
using a plate comprising a metallic material as said second plate (23), and
pressurizing and heating said fist plate (22) and said second plate (23), with an adhesive protective sheet (25) being interposed between said first plate (22) and said second plate (23) throughout the surfaces of these plates (22,23), said adhesive protective sheet (25) having a lower melting point than melting points of said first plate (22) and said second plate (23), and being thermoplastic and anticorrosive, to melt said adhesive protective sheet (25), thereby bonding said first plate (22) and said second plate (23) together by said adhesive protective sheet (25).

4. A method for producing a channel-incorporating pedestal (41) as claimed in claim 3, said channel-incorporating pedestal (41)
comprising a third plate (43) joined together with said first plate (42) and second plate (44), with said second plate (44) being interposed between said first plate (42) and said third plate (43),
incorporating a second groove (52), which is formed on a joining surface (43c) of said third plate (43), as a channel for a fluid,
bringing said second groove (52) into communication with an instrument (47), which is placed on a surface (43a) of said third plate (43), via a second communication hole (53) formedinsaidthirdplate (43),
said method including the steps of:
using a plate comprising an anticorrosive material as said third plate (43),
pressurizing and heating said fist plate (42), said second plate (44), and said third plate (43), with said first adhesive protective sheet (45) being interposed between said first plate (42) and said second plate (44) throughout the surfaces of these plates (42,44), said first adhesive protective sheet (45) having a lower melting point than melting points of said first plate (42)., said second plate (44), and said third plate (43), and with a second adhesive protective sheet (46) being interposed between said third plate (43) and said second plate (44) throughout the surfaces of these plates (43,44), said second adhesive protective sheet (46) having a lower melting point than melting points of said first plate (42), said second plate (44), and said third plate (43), and being thermoplastic and anticorrosive, to melt said first adhesive protective sheet (45) and said second adhesive protective sheet (46), thereby bonding said first plate (42) and said second plate (44) together by said first adhesive protective sheet (45), and bonding said third plate (43) and said second plate (44) together by said second adhesive protective sheet (46).

## Patentansprüche

1. Block (21) mit Kanälen, umfassend eine erste Platte (22) und eine zweite Platte (23), die miteinander verbunden sind,
der eine Nut (28) beinhaltet, die in der Verbindungsfläche (22b) der ersten Platte (22) als Kanal für ein Fluid ausgebildet ist, und
der die Nut (28) mit einem Instrument (24) in Verbindung bringt, das über ein in der ersten Platte (22) ausgebildetes Verbindungsloch (29) auf einer Fläche (22c) der ersten Platte (22) angeordnet ist,
wobei die erste Platte (22) ein Korrosionsschutzmaterial umfasst, **dadurch gekennzeichnet, dass**
die zweite Platte (23) ein metallisches Material umfasst, und
die erste Platte (22) und die zweite Platte (23) durch eine haftklebende Schutzfolie (25) miteinander verklebt sind, die zwischen der ersten Platte (22) und der zweiten Platte (23) über die gesamte Fläche dieser Platten (22, 23) eingefügt ist, wobei die haftklebende Schutzfolie (25) einen geringeren Schmelzpunkt als die Schmelzpunkte der ersten Platte (22) und der zweiten Platte (23) aufweist und thermoplastisch und korrosionsverhindernd ist.

2. Block (41) mit Kanälen nach Anspruch 1,
der eine dritte Platte (43) umfasst, die mit der ersten Platte (42) und der zweiten Platte (44) verbunden ist, wobei die zweite Platte (44) zwischen der ersten Platte (42) und der dritten Platte (43) eingefügt ist,
der eine zweite Nut (52) beinhaltet, die in einer Verbindungsfläche (43c) der dritten Platte (43) als Kanal für ein Fluid ausgebildet ist, und
der die zweite Nut (52) mit einem Instrument (47) in Verbindung bringt, das über ein in der dritten Platte (43) ausgebildetes zweites Verbindungsloch (53) auf einer Fläche (43a) angeordnet ist,
wobei die dritte Platte (43) ein Korrosionsschutzmaterial umfasst,
die dritte Platte (43) und die zweite Platte (44) durch eine zweite haftklebende Schutzfolie (46) miteinander verklebt sind, die zwischen der dritten Platte (43) und der zweiten Platte (44) über die gesamte Fläche dieser Platten (43, 44) eingefügt ist, wobei die haftklebende Schutzfolie (46) einen geringeren Schmelzpunkt als die Schmelzpunkte der ersten Platte (42), der zweiten Platte (44) und der dritten Platte (43) aufweist und thermoplastisch und korrosionsverhindernd ist.

3. Verfahren zur Herstellung eines Blocks (21) mit Kanälen,
wobei der Block (21) mit Kanälen eine erste Platte (22) und eine zweite Platte (23) umfasst, die miteinander verbunden sind,
eine Nut (28) beinhaltet, die in der Verbindungsfläche (22b) der ersten Platte (22) als Kanal für ein Fluid ausgebildet ist, und
die Nut (28) mit einem Instrument (24) in Verbindung bringt, das über ein in der ersten Platte (22) ausgebildetes Verbindungsloch (29) auf einer Fläche (22c) der ersten Platte (22) angeordnet ist,
wobei das Verfahren die folgenden Schritte umfasst:
Verwendung einer ein Korrosionsschutzmaterial umfassenden Platte als erste Platte (22),
Verwendung einer ein metallisches Material umfassenden Platte als zweite Platte (23) und
Druckbeaufschlagen und Erwärmen der ersten Platte (22) und der zweiten Platte (23), wobei zwischen der ersten Platte (22) und der zweiten Platte (23) über die gesamte Fläche dieser Platten (22, 23) eine haftklebende Schutzfolie (25) eingefügt ist, die einen geringeren Schmelzpunkt als die Schmelzpunkte der ersten Platte (22) und der zweiten Platte (23) aufweist und thermoplastisch und korrosionsverhindernd ist, um die haftklebende Schutzfolie (25) zum Schmelzen zu bringen, wodurch die erste Platte (22) und die zweite Platte ( 23) durch die haftklebende Schutzfolie (25) miteinander verklebt sind.

4. Verfahren zur Herstellung eines Blocks (41) mit Kanälen, wobei der Block (41) mit Kanälen
eine dritte Platte (43) umfasst, die mit der ersten Platte (42) und der zweiten Platten (44) verbunden ist, wobei die zweite Platte (44) zwischen der ersten Platte (42) und der dritten Platte (43) eingefügt ist,
eine zweite Nut (52) beinhaltet, die in einer Verbindungsfläche (43c) der dritten Platte (43) als Kanal für ein Fluid ausgebildet ist,
die zweite Nut (52) mit einem Instrument (47) in Verbindung bringt, das über ein in der dritten Platte (43) ausgebildetes zweites Verbindungsloch (53) auf einer Fläche (43a) der dritten Platte (43) angeordnet ist,
wobei das Verfahren die folgenden Schritte umfasst:
Verwendung einer ein Korrosionsschutzmaterial umfassenden Platte als dritte Platte (43),
Druckbeaufschlagen und Erwärmen der ersten Platte (42), der zweiten Platte (44) und der dritten Platte (43), wobei zwischen der ersten Platte (42) und der zweiten Platte (44) über die gesamte Fläche dieser Platten (42, 44) eine erste haftklebende Schutzfolie (45) eingefügt ist, wobei die erste haftklebende Schutzfolie (45) einen geringeren Schmelzpunkt als die Schmelzpunkte der ersten Platte (42), der zweiten Platte (44) und der dritten Platte (43) aufweist, und wobei zwischen der dritten Platte (43) und der zweiten Platte (44) über die gesamte Fläche dieser Platten (43, 44) eine zweite haftklebende Schutzfolie (46) eingefügt ist, wobei die zweite haftklebende Schutzfolie (46) einen geringeren Schmelzpunkt als die Schmelzpunkte der ersten Platte (42), der zweiten Platte (44) und der dritten Platte (43) aufweist und thermoplastisch und korrosionsverhindernd ist, um die erste haftklebende Schutzfolie (45) und die zweite haftklebende Schutzfolie (46) zum Schmelzen zu bringen, wodurch die erste Platte (42) und die zweite Platte (44) durch die erste haftklebende Schutzfolie (45) miteinander verklebt werden und die dritte Platte (43) und die zweite Platte (44) durch die zweite haftklebende Schutzfolie (46) miteinander verklebt werden.

## Revendications

1. Socle avec conduit (21)
comprenant une première plaque (22) et une deuxième plaque (23) jointes l'une à l'autre,
incorporant une rainure (28), qui est formée sur une surface de jonction (22b) de ladite première plaque (22), en tant que conduit pour un fluide, et
mettant ladite rainure (28) en communication avec un instrument (24) qui est placé sur une surface (22c) de ladite première plaque (22), par l'intermédiaire d'un trou de communication (29) formé dans ladite première plaque (22),
ladite première plaque (22) comprenant un matériau anticorrosion, **caractérisé en ce que**
ladite deuxième plaque (23) comprend un matériau métallique, et
ladite première plaque (22) et ladite deuxième plaque (23) sont liées l'une à l'autre par une feuille de protection adhésive (25) interposée entre ladite première plaque (22) et ladite deuxième plaque (23) sur toutes les surfaces de ces plaques (22, 23), ladite feuille de protection adhésive (25) ayant un point de fusion inférieur aux points de fusion de ladite première plaque (22) et de ladite deuxième plaque (23), et étant thermoplastique et anticorrosion.

2. Socle avec conduit (41), selon la revendication 1,
comprenant une troisième plaque (43) jointe auxdites première plaque (42) et deuxième plaque (44), ladite deuxième plaque (44) étant interposée entre ladite première plaque (42) et ladite troisième plaque (43),
incorporant une deuxième rainure (52), qui est formée sur une surface de jonction (43c) de ladite troisième plaque (43), en tant que conduit pour un fluide, et
mettant ladite deuxième rainure (52) en communication avec un instrument (47) qui est placé sur une surface (43a) de ladite troisième plaque (43), par l'intermédiaire d'un deuxième trou de communication (53) formé dans ladite troisième plaque (43),
ladite troisième plaque (43) comprenant un matériau anticorrosion,
ladite troisième plaque (43) et ladite deuxième plaque (44) étant liées l'une à l'autre par une deuxième feuille de protection adhésive (46) interposée entre ladite troisième plaque (43) et ladite deuxième plaque (44) sur toutes les surfaces de ces plaques (43, 44), ladite deuxième feuille de protection adhésive (46) ayant un point de fusion inférieur aux points de fusion de ladite première plaque (42), de ladite deuxième plaque (44) et de ladite troisième plaque (43), et étant thermoplastique et anticorrosion.

3. Procédé pour produire un socle avec conduit (21),
ledit socle avec conduit (21)
comprenant une première plaque (22) et une deuxième plaque (23) liées l'une à l'autre,
incorporant une rainure (28), qui est formée sur une surface de jonction (22b) de ladite première plaque (22), en tant que conduit pour un fluide, et
mettant ladite rainure (28) en communication avec un instrument (24), qui est placé sur une surface (22c) de ladite première plaque (22), par l'intermédiaire d'un trou de communication (29) formé dans ladite première plaque (22),
ledit procédé comprenant les étapes consistant à :
utiliser une plaque comprenant un matériau anticorrosion en tant que dite première plaque (22),
utiliser une plaque comprenant un matériau métallique en tant que dite deuxième plaque (23), et
mettre sous pression et chauffer ladite première plaque (22) et ladite deuxième plaque (23), une feuille de protection adhésive (25) étant interposée entre ladite première plaque (22) et ladite deuxième plaque (23) sur toutes les surfaces de ces plaques (22, 23), ladite feuille de protection adhésive (25) ayant un point de fusion inférieur aux points de fusion de ladite première plaque (22) et de ladite deuxième plaque (23), et étant thermoplastique et anticorrosion, pour fondre ladite feuille de protection adhésive (25), liant de ce fait ladite première plaque (22) et ladite deuxième plaque (23) l'une à l'autre par ladite feuille de protection adhésive (25).

4. Procédé pour produire un socle avec conduit (41) selon la revendication 3, ledit socle avec conduit (41)
comprenant une troisième plaque (43) liée auxdites première plaque (42) et deuxième plaque (44), ladite deuxième plaque (44) étant interposée entre ladite première plaque (42) et ladite troisième plaque (43),
incorporant une deuxième rainure (52), qui est formée sur une surface de jonction (43c) de ladite troisième plaque (43), en tant que conduit pour un fluide,
mettant ladite deuxième rainure (52) en communication avec un instrument (47), qui est placé sur une surface (43a) de ladite troisième plaque (43), par l'intermédiaire d'un deuxième trou de communication (53) formé dans ladite troisième plaque (43),
ledit procédé comprenant les étapes consistant à :
utiliser une plaque comprenant un matériau anticorrosion en tant que dite troisième plaque (43),
mettre sous pression et chauffer ladite première plaque (42), ladite deuxième plaque (44) et ladite troisième plaque (43), ladite première feuille de protection adhésive (45) étant interposée entre ladite première plaque (42) et ladite deuxième plaque (44), sur toutes les surfaces de ces plaques (42, 44), ladite première feuille de protection adhésive (45) ayant un point de fusion inférieur aux points de fusion de ladite première plaque (42), de ladite deuxième plaque (44) et de ladite troisième plaque (43), et une deuxième feuille de protection adhésive (46) étant interposée entre ladite troisième plaque (43) et ladite deuxième plaque (44), sur toutes les surfaces de ces plaques (43, 44), ladite deuxième feuille de protection adhésive (46) ayant un point de fusion inférieur aux points de fusion de ladite première plaque (42), de ladite deuxième plaque (44) et de ladite troisième plaque (43), et étant thermoplastique et anticorrosion, pour fondre ladite première feuille de protection adhésive (45) et ladite deuxième feuille de protection adhésive (46), liant de ce fait ladite première plaque (42) et ladite deuxième plaque (44) l'une à l'autre par ladite première feuille de protection adhésive (45), et liant ladite troisième plaque (43) et ladite deuxième plaque (44) l'une à l'autre par ladite deuxième feuille de protection adhésive (46).
